# EUROPEAN PATENT APPLICATION

(11) **EP 4 768 140 A1**
(43) Date of publication of application: **01.07.2026**
(21) Application number: 25857920.0
(22) Date of filing: 01.07.2025
(51) Int. Cl.: B05C 5/02, H01M 4/04, B05C 11/10

(54) **BATTERY ELECTRODE COATING DEVICE**

(30) Priority: 22.10.2024 KR 20240144491
(71) Applicant: LG ENERGY SOLUTION, LTD., Seoul 07335 (KR)
(72) Inventor: JANG, Jiwoong, Daejeon 34122 (KR); AHN, Byoung Hoon, Daejeon 34122 (KR); PARK, Seung Seo, Daejeon 34122 (KR); HWANG, Yujin, Daejeon 34122 (KR); LEE, Jungwon, Daejeon 34122 (KR); KIM, Joohee, Daejeon 34122 (KR)
(74) Representative: Goddar, Heinz J.
(86) International application number: PCT/KR2025/009298
(87) International publication number: WO 2026/089195

(57) **Abstract**

A battery electrode coating device includes a coating die, a spacer shim mounted on the coating die, and a bolt-type fixing member that fixes the spacer shim to the coating die such that a fastening portion passes through the spacer shim and fastens to the coating die. A portion of the fastening portion positioned within a through hole of the spacer shim includes at least two steps having different diameters.

## Description

### [Cross-Reference To Related Applications]

This application is a national phase entry of International Application No. PCT/KR2025/009298 filed July 1, 2025, which claims priority to Korean Patent Application No. 10-2024-0144491, filed on October 22, 2024.

### [Technical Field]

The present disclosure relates to an electrode coating device, and more specifically, to a battery electrode coating device that coats an intermediate material onto a thin film during a battery electrode process.

### [Background]

With the increasing technology development and demand for mobile devices, the demand for secondary batteries as an energy source is rapidly increasing. Among the secondary batteries, lithium secondary batteries, which exhibit high energy density and operating potential, long cycle life, and low self-discharge rate, have been commercialized and widely used.

In addition, recently, increased interest in environmental issues has brought a great deal of research associated with electric vehicles (EVs), hybrid electric vehicles (HEVs), and the like as substitutes for vehicles using fossil fuels such as gasoline vehicles and diesel vehicles which are main factors of air pollution. As a power source of such electric vehicles (EVs) and hybrid electric vehicles (HEVs), lithium secondary batteries having high energy density, high discharge voltage and output stability have been mainly studied and used.

Such a lithium secondary battery is generally manufactured by stacking or winding positive and negative electrodes with a separator being interposed therebetween, and embedding them together with an electrolyte solution in a battery case. Electrodes such as positive and negative electrodes are manufactured by applying an active material slurry on a current collector, followed by drying and rolling. The application of the active material slurry is generally performed using a coating device that discharges the active material slurry.

Generally, an electrode coating device includes an upper coating die, a lower coating die, and a shim assembly interposed between them. The shim assembly includes spacer shims for discharging an insulating liquid and a body shim, and the spacer shims are fixed to the lower coating die via fixing bolts.

In the coating device, the spacer shims are individually assembled to the lower coating die using the fixing bolts. When fixing the spacer shims to the lower coating die using the fixing bolts in this manner, management of assembly tolerance is important. In particular, management of shim offset, which refers to a distance between the spacer shim and the end of the lower coating die, is essential.

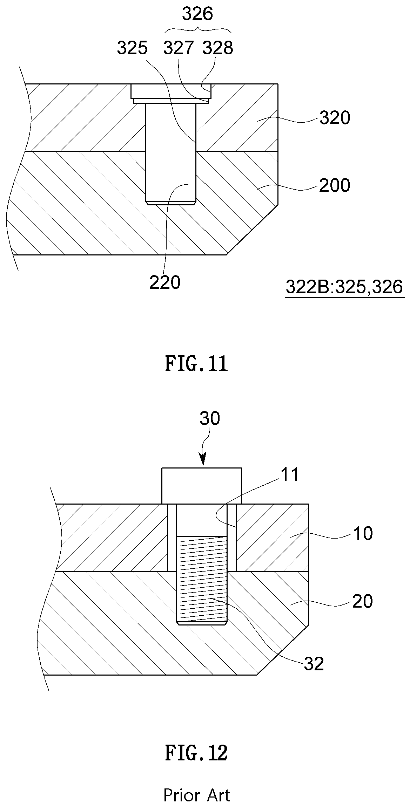

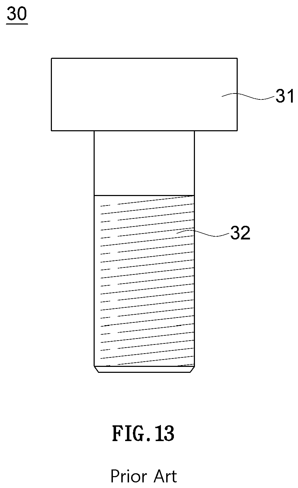

Generally, fixing bolts 30 for assembling spacer shims 10 to a lower coating die 20 include a head portion 31 and a fastening portion 32 as illustrated in FIGS. 12 and 13, and the fastening portion 32 is formed in a single-step structure having a uniform diameter. As such, according to the fastening structure of the related art in which the fastening portion 32 of the fixed bolt 30 is formed as a single-step structure, it is not easy to manage the assembly tolerance between the spacer shim 10 and the lower coating die 20. In particular, since an inner diameter of a shim hole 11 formed in the spacer shim 10 is formed relatively larger compared to the diameter of the fastening portion 32, the clearance of the spacer shim 10 is inevitably large. That is, the large assembly tolerance between the spacer shims 10 and the lower coating die 20 is unavoidable.

As such, if the assembly tolerance between the spacer shims 10 and the lower coating die 20 is large, the coating quality of the electrode inevitably deteriorates.

### [Technical Problem]

The present disclosure has been devised to solve the problems of the related art as described above, and an object thereof is to provide a battery electrode coating device configured to allow smooth management of shim offset between a spacer shim and an end of a lower coating die.

### [Technical Solution]

To achieve the above object, a battery electrode coating device according to the present disclosure includes a coating die; a spacer shim mounted on the coating die; and a bolt-type fixing member configured to fix the spacer shim to the coating die in such a manner that a fastening portion passes through the spacer shim and is then fastened to the coating die, in which a portion of the fastening portion positioned within a through hole of the spacer shim is configured in at least two steps having different diameters.

The coating die is formed with a fastening groove into which the fastening portion is screwed.

At least one step of the portion of the fastening portion that is positioned within the through hole may be in surface contact, on its outer peripheral surface, with an inner peripheral surface of the through hole.

The fastening portion may include a threaded portion, a part thereof being positioned within the through hole and a remainder thereof being screwed into the coating die, the threaded portion having threads formed on all or part thereof; and a tolerance improvement portion formed between a head portion of the fixing member and the threaded portion, having a diameter larger than that of the threaded portion, and being positioned within the through hole.

The through hole may be formed in a single step having a constant inner diameter.

The through hole may include a threaded portion through hole through which the threaded portion passes, and a tolerance improvement portion through hole through which the tolerance improvement portion passes, the tolerance improvement portion through hole being connected to the threaded portion through hole and having an inner diameter larger than that of the threaded portion through hole.

The tolerance improvement portion may be formed in a single step having a constant diameter, and the tolerance improvement portion through hole may be formed in a single step having a constant inner diameter.

The tolerance improvement portion may be formed in at least two steps having different diameters, and the tolerance improvement portion through hole may be formed in at least two steps having different inner diameters, and a level difference may be formed between the respective steps.

The tolerance improvement portion may include a first tolerance improvement portion connected to the threaded portion and having a diameter larger than that of the threaded portion, and a second tolerance improvement portion formed between the first tolerance improvement portion and the head portion and having a diameter larger than that of the first tolerance improvement portion.

The tolerance improvement portion through hole may include a first tolerance improvement portion through hole through which the first tolerance improvement portion passes, the first tolerance improvement portion through hole being connected to the threaded portion through hole and having an inner diameter larger than that of the threaded portion through hole, and a second tolerance improvement portion through hole through which the second tolerance improvement portion passes, the second tolerance improvement portion through hole being connected to the first tolerance improvement portion through hole and having an inner diameter larger than that of the first tolerance improvement portion through hole.

The spacer shim may be fixed to the coating die by at least two fixing members.

The spacer shim may be fixed to the coating die using three fixing members, and the three fixing members may be arranged on vertices of a virtual isosceles triangle.

### [Advantageous Effects]

According to the battery electrode coating device of the present disclosure, of the fastening portion that passes through the through hole of the spacer shim and is then fastened to the coating die, the portion positioned within the through hole of the spacer shim is configured in at least two steps having different diameters. Accordingly, the assembly tolerance between the spacer shim and the coating die can be reduced when the assembly configuration of the spacer shim and the coating die of the related art is used as is.

That is, the fastening portion is configured by the threaded portion having threads formed thereon and the tolerance improvement portion having a diameter larger than that of the threaded portion and positioned within the through hole, so that a gap between the fastening portion and the inner surface of the through hole is reduced compared to the related art, thereby allowing the assembly tolerance between the spacer shim and the coating die to be reduced.

In addition, at least one step of the portion of the fastening portion that is positioned within the through hole is brought into surface contact, on its outer peripheral surface, with the inner peripheral surface of the through hole, so that the assembly tolerance between the spacer shim and the coating die can be further reduced.

Since the assembly tolerance between the spacer shim and the coating die can be minimized through the above-described structures, good coating quality can be maintained.

### [Brief Description of Drawings]

FIG. 1 is an exploded perspective view of a battery electrode coating device according to an exemplary aspect of the present disclosure.
FIG. 2 is a perspective view of a spacer shim.
FIG. 3 is a perspective view illustrating the spacer shim fixed to a lower coating die.
FIG. 4 is a cross-sectional view illustrating an example in which the spacer shim is fixed to the lower coating die by a fixing member.
FIG. 5 is a side view of the fixing member illustrated in FIG. 4.
FIG. 6 is a cross-sectional view illustrating a state in which the fixing member is removed from FIG. 4.
FIG. 7 is a cross-sectional view illustrating another example in which the spacer shim is fixed to the lower coating die by a fixing member.
FIG. 8 is a cross-sectional view illustrating a state in which the fixing member is removed from FIG. 7.
FIG. 9 is a cross-sectional view illustrating still another example in which the spacer shim is fixed to the lower coating die by a fixing member.
FIG. 10 is a side view of the fixing member illustrated in FIG. 9.
FIG. 11 is a cross-sectional view illustrating a state in which the fixing member is removed from FIG. 9.
FIG. 12 is a cross-sectional view illustrating an assembly relationship between a spacer shim and a lower coating die according to the related art.
FIG. 13 is a side view of the fixing member illustrated in FIG. 12.

### [Detailed Description]

Hereinafter, a battery electrode coating device according to preferred exemplary aspects of the present disclosure will be described in detail with reference to the accompanying drawings.

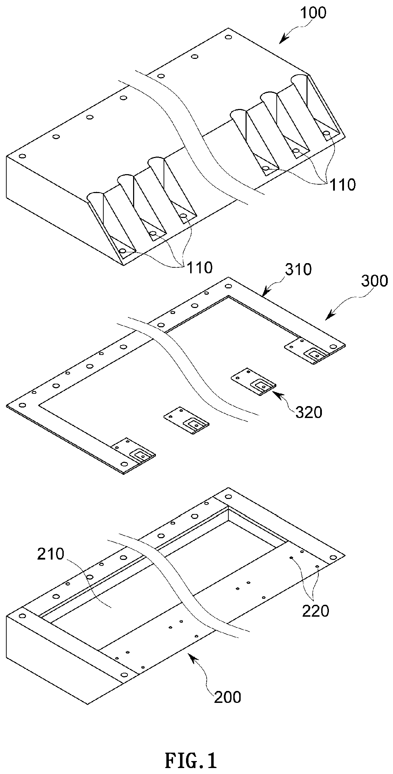

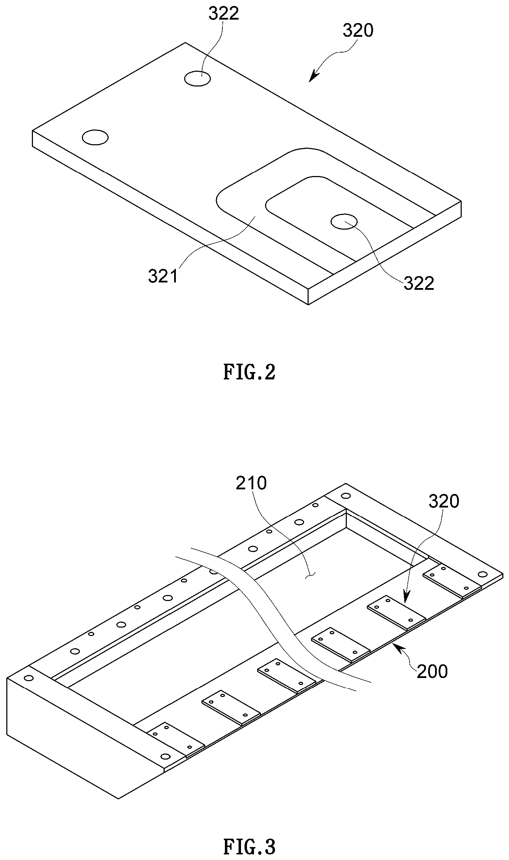

FIG. 1 is an exploded perspective view of a battery electrode coating device according to an exemplary aspect of the present disclosure, FIG. 2 is a perspective view of a spacer shim, and FIG. 3 is a perspective view illustrating the spacer shim fixed to a lower coating die.

A battery electrode coating device according to an exemplary aspect of the present disclosure includes an upper coating die 100, a lower coating die 200, and a shim assembly 300 provided between them. The shim assembly 300 includes a body shim 310 and spacer shims 320 that discharge an insulating liquid. The spacer shims 320 may be fixed to the lower coating die 200 by bolt-type fixing members described below.

The battery electrode coating device is configured such that an active material slurry stored in the lower coating die 200 is discharged through spaces between the spacer shims 320. The insulating fluid is discharged from the spacer shims 320.

The upper coating die 100 is formed with insulating liquid injection paths 110 into which an insulating liquid is injected from the outside. The insulating liquid injection path 110 is formed from top to bottom. The insulating fluid is supplied to the spacer shims 320 through the insulating fluid injection paths 110 of the upper coating die 100.

The lower coating die 200 is formed with a slurry injection path (not illustrated) into which an active material slurry is injected from the outside, and a slurry storage space 210 in which the active material slurry is stored. The active material slurry stored in the slurry storage space 210 of the lower coating die 200 is discharged to the spaces between the spacer shims 320.

The plurality of spacer shims 320 are fixed at equal intervals on an upper surface of the lower coating die 200, especially adjacent to an end portion of the lower coating die 200. The spacer shims 320 are individually assembled to the lower coating die 200 using fixing members. When fixing the spacer shims 320 to the lower coating die 200 using the fixing members in this manner, management of assembly tolerance is important. In particular, in order to maintain good coating quality, management of shim offset, which refers to a distance between the spacer shim 320 and an end of the lower coating die 200, is essential.

The spacer shim 320 is formed with an insulating liquid flow path 321 through which the insulating liquid injected from the upper coating die 100 flows, and the insulating liquid is discharged through an end portion of the insulating liquid flow path 321 during a coating process. The insulating fluid flow path 321 may have two branch flow paths extending parallel to each other toward one end side of the spacer shim 320.

Each spacer shim 320 is formed with three through holes 322, and each spacer shim 320 is fixed to the lower coating die 200 using three fixing members. The three through holes 322 are arranged in a triangular shape, so that fixing stability of the spacer shim 320 can be improved. In an exemplary aspect, one of the three through holes 322 is perforated adjacent to one end side of the spacer shim 320, and the remaining two through holes are perforated adjacent to the other end side of the spacer shim. The three through holes 322 may be arranged on vertices of a virtual isosceles triangle. The through hole 322 perforated on one end side of the spacer shim 320 may be arranged between the two branch flow paths of the insulating liquid flow path 321.

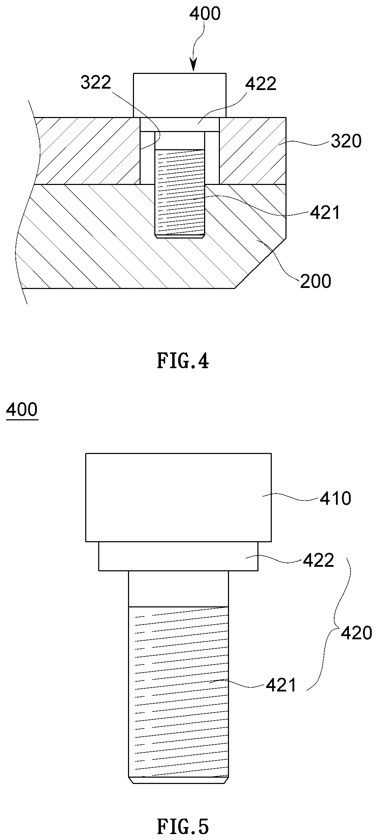

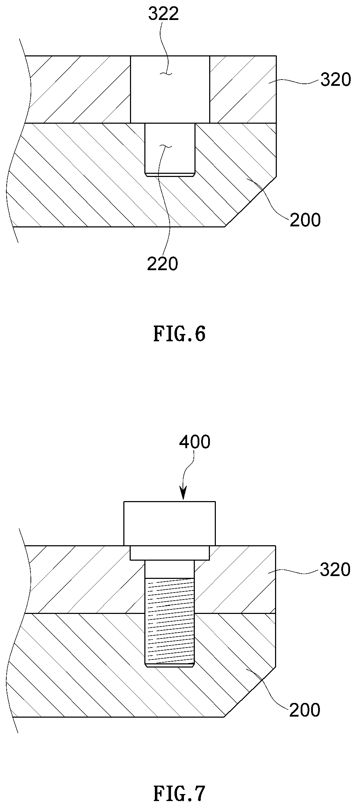

FIG. 4 is a cross-sectional view illustrating an example in which the spacer shim is fixed to the lower coating die by the fixing member, FIG. 5 is a side view of the fixing member illustrated in FIG. 4, and FIG. 6 is a cross-sectional view illustrating a state in which the fixing member is removed from FIG. 4.

The fixing member 400 is configured as a bolt type to fix the spacer shim 320 to the lower coating die 200 and includes a head portion 410 and a fastening portion 420. The fastening portion 420 includes two portions having different diameters.

The head portion 410 of the fixing member 400 is engaged with an upper surface of the spacer shim 320, and the fastening portion 420 passes through the spacer shim 320 and is then screwed into the lower coating die 200, thereby fastening the spacer shim 320 and the lower coating die 200. That is, a lower surface of the head portion 410 is in close contact with the upper surface of the spacer shim 320, and the fastening portion 420 passes through the spacer shim 320 and is screwed into the coating die 200.

The spacer shim 320 is formed with the through hole 322 through which the fastening portion 420 passes, and the lower coating die 200 is formed with a fastening groove 220 into which the fastening portion 420 is screwed. The fastening portion 420 includes at least two portions having different diameters. In the exemplary aspect illustrated in FIGS. 4 to 6, the fastening portion 420 includes two portions having different diameters. The through hole 322 and the fastening groove 220 are each formed in a single step having a constant inner diameter.

The fastening portion 420 may include a threaded portion 421 and a tolerance improvement portion 422. The threaded portion 421 of the fastening portion 420 passes through the through hole 322 and is screwed into the fastening groove 220. The threaded portion 421 may have threads formed on all or part thereof. The tolerance improvement portion 422 may be formed between the head portion part 410 and the threaded portion 421, may have a diameter larger than that of the threaded portion 421, and may be inserted into the through hole 322. A level difference is formed between the threaded portion 421 and the tolerance improvement portion 422.

The tolerance improvement portion 422 may be inserted into the through hole 322 while being in surface contact with the through hole 322. That is, an inner diameter of the through hole 322 is formed to correspond to a diameter of the tolerance improvement portion 422, thereby allowing the tolerance improvement portion 422 to be inserted into the through hole 322 while being in surface contact, on its outer peripheral surface, with an inner peripheral surface of the through hole 322.

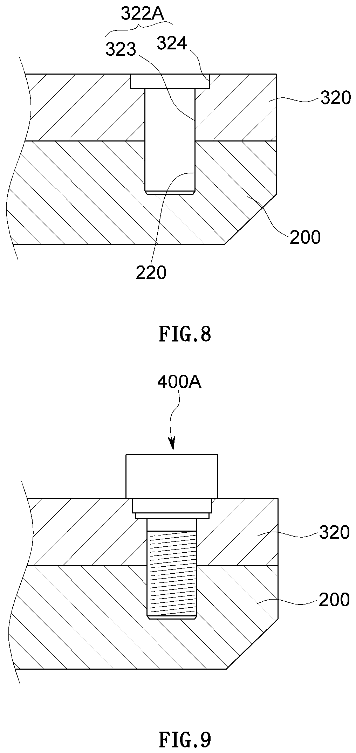

FIG. 7 is a cross-sectional view illustrating another example in which the spacer shim is fixed to the lower coating die by a fixing member, and FIG. 8 is a cross-sectional view illustrating a state in which the fixing member is removed from FIG. 7.

In the present exemplary aspect, a through hole 322A includes a threaded portion through hole 323 through which the threaded portion 421 passes, and a tolerance improvement portion through hole 324 into which the tolerance improvement portion 422 is inserted, the tolerance improvement portion through hole 324 being connected to the threaded portion through hole 323 and having an inner diameter larger than that of the threaded portion through hole 323. A level difference is formed between the threaded portion through hole 323 and the tolerance improvement portion through hole 324.

Note that a portion of the threaded portion 421 where no threads are formed may pass through the threaded portion through hole 323 while being in surface contact, on its outer peripheral surface, with an inner peripheral surface of the threaded portion through hole 323, and the tolerance improvement portion 422 may be inserted into the tolerance improvement portion through hole 324 while being in surface contact, on its outer peripheral surface, with an inner peripheral surface of the tolerance improvement portion through hole 324.

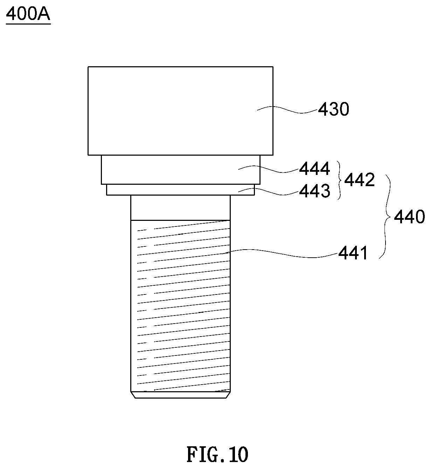

FIG. 9 is a cross-sectional view illustrating still another example in which the spacer shim is fixed to the lower coating die by a fixing member, FIG. 10 is a side view of the fixing member illustrated in FIG. 9, and FIG. 11 is a cross-sectional view illustrating a state in which the fixing member is removed from FIG. 9.

In the present exemplary aspect, a fixing member 400A includes a head portion 430 and a fastening portion 440, but the fastening portion 440 may be formed in a three-step structure having different diameters.

The fastening portion 440 may include a threaded portion 441 and a two-step tolerance improvement portion 442.

The tolerance improvement portion 442 includes a first tolerance improvement portion 443 connected to the threaded portion 441 and having a diameter larger than that of the threaded portion 441, and a second tolerance improvement portion 444 formed between the first tolerance improvement portion 443 and the head portion part 430 and having a diameter larger than that of the first tolerance improvement portion 443. Level differences are formed between the threaded portion 441 and the first tolerance improvement portion 443, and between the first tolerance improvement portion 443 and the second tolerance improvement portion 444, respectively.

A through hole 322B formed in the spacer shim 320 includes a threaded portion through hole 325 and a tolerance improvement portion through hole 326.

The tolerance improvement portion through hole 326 includes a first tolerance improvement portion through hole 327 through which the first tolerance improvement portion 443 is inserted, the first tolerance improvement portion through hole 327 being connected to the threaded portion through hole 325 and having an inner diameter larger than that of the threaded portion through hole 325, and a second tolerance improvement portion through hole 328 through which the second tolerance improvement portion 444 is inserted, the second tolerance improvement portion through hole 328 being connected to the first tolerance improvement portion through hole 327 and having an inner diameter larger than that of the first tolerance improvement portion through hole 327. Level differences are formed between the threaded portion through hole 325 and the first tolerance improvement portion through hole 327, and between the first tolerance improvement portion through hole 327 and the second tolerance improvement portion through hole 328, respectively.

Note that a portion of the threaded portion 441 where no threads are formed may pass through the threaded portion through hole 325 while being in surface contact, on its outer peripheral surface, with an inner peripheral surface of the threaded portion through hole 325, the first tolerance improvement portion 443 may be inserted into the first tolerance improvement portion through hole 327 while being in surface contact, on its outer peripheral surface, with an inner peripheral surface of the first tolerance improvement portion through hole 327, and the second tolerance improvement portion 444 may be inserted into the second tolerance improvement portion through hole 328 while being in surface contact, on its outer peripheral surface, with an inner peripheral surface of the second tolerance improvement portion through hole 328.

According to the battery electrode coating device of the present disclosure, the fastening portion 420, 440 of the fixing member 400, 400A formed as a bolt type may be configured to have multiple steps having different diameters, and at least one step of the multiple steps may be configured to be inserted into the through hole 322, 322A, 322B of the spacer shim 320 in a manner such that the outer peripheral surface of the step is in surface contact with the inner peripheral surface of the through hole.

In particular, the fastening portion 420, 440 may include the threaded portion 421, 441 that passes through the spacer shim 320 and is screwed into the lower coating die 200, and the tolerance improvement portion 422, 442 formed between the threaded portion 421, 441 and the head portion 410, 430, and the tolerance improvement portion 422, 442 may be configured in at least one step having a different diameter, and the entirety of the tolerance improvement portion 422, 442 or at least one step may be inserted into the through hole 322, 322A, 322B in a surface contact manner with the inner circumferential surface of the through hole.

Since the assembly tolerance of the spacer shim 320 is reduced to within several micrometers through such an assembly structure, the shim offset between the spacer shim 320 and the end of the lower coating die 200 can be smoothly managed, and the coating quality can be favorably maintained.

In particular, in the exemplary aspect illustrated in FIGS. 4 to 6, only the fixing member 400 is changed while the spacer shim 320 and the lower coating die 200 are used as is, thereby allowing the assembly tolerance between the spacer shim 320 and the lower coating die 200 to be minimized. For reference, the through hole 322 formed in the spacer shim 320 illustrated in FIGS. 4 to 6 may be formed to have the same size as that of the shim hole 11 formed in the spacer shim 10 of the related art.

In the exemplary aspect illustrated in FIGS. 4 to 6, the fastening portion 420 is formed in a two-step structure of the threaded portion 421 and the tolerance improvement portion 422 having different diameters, but the threaded portion 421 is formed to have the same diameter as that of the fastening portion 32 of the related art and the diameter of the tolerance improvement portion 422 is formed larger than the diameter of the threaded portion 421, so that the gap between the fastening portion 420 and the inner surface of the through hole 322 is reduced compared to the related art, thereby allowing the assembly tolerance between the spacer shim and the coating die to be reduced. In particular, the tolerance improvement portion 422 is inserted into the through hole 322 in a surface contact manner with the inner surface of the through hole, so that the assembly tolerance can be minimized.

Although the battery electrode coating device according to the exemplary aspects of the present disclosure has been described in detail with reference to the accompanying drawings, the present disclosure is not limited to the above-described exemplary aspects and may be implemented in various modified forms within the scope of the claims.

### [Description of Main Reference Numerals of Drawings]

100: upper coating die 110: insulating fluid injection path
200: lower coating die 210: slurry storage space
220: fastening groove 300: shim assembly
310: body shim 320: spacer shim
321: insulating fluid flow path 322, 322A, 322B: through hole
323, 325: threaded portion through hole 324, 326: tolerance improvement portion through hole
327: first tolerance improvement portion through hole 328: second tolerance improvement portion through hole
400, 400A: fixing member 410, 430: head portion
420, 440: fastening portion 421, 441: threaded portion
422, 442: tolerance improvement portion 443: first tolerance improvement portion
444: second tolerance improvement portion

## Claims

1. A battery electrode coating device, comprising:
a coating die;
a spacer shim mounted on the coating die; and
a bolt-type fixing member configured to fix the spacer shim to the coating die such that a fastening portion is configured to pass through the spacer shim and fasten to the coating die,
wherein a portion of the fastening portion positioned within a through hole of the spacer shim includes at least two steps having different diameters.

2. The battery electrode coating device of claim 1, wherein the coating die includes a fastening groove into which the fastening portion is screwed.

3. The battery electrode coating device of claim 1, wherein an outer peripheral surface of at least one step of the portion of the fastening portion that is positioned within the through hole is in surface contact with an inner peripheral surface of the through hole.

4. The battery electrode coating device of claim 1, wherein
the fastening portion comprises:
a threaded portion, a part thereof being positioned within the through hole and a remainder thereof being screwed into the coating die, the threaded portion having threads on all or part thereof; and
a tolerance improvement portion between a head portion of the bolt-type fixing member and the threaded portion, the tolerance improvement portion having a diameter larger than a diameter of the threaded portion and being positioned within the through hole.

5. The battery electrode coating device of claim 4, wherein the through hole includes a single step having a constant inner diameter.

6. The battery electrode coating device of claim 4, wherein
the through hole comprises:
a threaded portion through hole through which the threaded portion of the fastening portion passes; and
a tolerance improvement portion through hole through which the tolerance improvement portion of the fastening portion passes, the tolerance improvement portion through hole being connected to the threaded portion through hole, wherein the tolerance improvement portion through hole includes an inner diameter larger than a diameter of the threaded portion through hole.

7. The battery electrode coating device of claim 6, wherein the tolerance improvement portion of the fastening portion includes a single step having a constant diameter, and the tolerance improvement portion through hole includes a single step having a constant inner diameter.

8. The battery electrode coating device of claim 6, wherein the tolerance improvement portion of the fastening portion includes at least two steps having different diameters, and the tolerance improvement portion through hole includes at least two steps having different inner diameters, and wherein a level difference is formed between the respective steps.

9. The battery electrode coating device of claim 8, wherein
the tolerance improvement portion of the fastening portion comprises:
a first tolerance improvement portion connected to the threaded portion of the fastening portion and having a diameter larger than the diameter of the threaded portion; and
a second tolerance improvement portion formed between the first tolerance improvement portion and the head portion and having a diameter larger than the diameter of the first tolerance improvement portion.

10. The battery electrode coating device of claim 9, wherein
the tolerance improvement portion through hole comprises:
a first tolerance improvement portion through hole through which the first tolerance improvement portion passes, the first tolerance improvement portion through hole being connected to the threaded portion through hole and having an inner diameter larger than the diameter of the threaded portion through hole, and
a second tolerance improvement portion through hole through which the second tolerance improvement portion passes, the second tolerance improvement portion through hole being connected to the first tolerance improvement portion through hole and having an inner diameter larger than the diameter of the first tolerance improvement portion through hole.

11. The battery electrode coating device of claim 1, wherein the spacer shim is configured to be fixed to the coating die by at least two fixing members.

12. The battery electrode coating device of claim 11, wherein the spacer shim is fixed to the coating die by three fixing members, and the three fixing members are arranged on vertices of a virtual isosceles triangle.
